# EUROPÄISCHE PATENTSCHRIFT

(11) **EP 3 228 172 B1**
(45) Veröffentlichungstag und Bekanntmachung des Hinweises auf die Patenterteilung: **29.08.2018**
(21) Anmeldenummer: 17401028.0
(22) Anmeldetag: 31.03.2017
(51) Int. Cl.: A01C 17/00

(54) **STEUERSYSTEM FÜR EINEN SCHLEUDERSTREUER UND VERFAHREN**
CONTROL SYSTEM FOR A BROADCASTER AND METHOD
SYSTÈME DE COMMANDE D'ÉPANDEUR CENTRIFUGE ET PROCÉDÉ

(30) Priorität: 08.04.2016 DE 102016106448
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Große Brinkhaus, Andre, 48149 Münster (DE); Probst, Sergej, 59379 Selm (DE)

(56) Entgegenhaltungen:
- EP-A1- 2 944 173
- EP-A2- 2 767 149
- DE-A1- 19 742 441

## Beschreibung

Die vorliegende Anmeldung behandelt ein Steuersystem für einen Schleuderstreuer und ein Verfahren entsprechend dem Oberbegriff der unabhängigen Patentansprüche 1 und 8.

Ein derartiger Schleuderstreuer ist beispielsweise durch die EP 2 944 173 A1 offenbart. Diese Schrift zeigt einen Schleudersteuer, welcher den Dünger über zwei Schleuderscheiben ausbringt. Mehrere Radarsensoren sind konzentrisch um die Schleuderscheibenmitte einer oder beider Schleuderscheiben an dem Schleudersteuer angeordnet. Diese erfassen die Verteilung der Düngerkörner unmittelbar nach dem Verlassen der Schleuderscheibe. Aus den Sensorsignalen lassen sich verschiedene Parameter der Verteilercharakteristik des Schleudersteuers ableiten. Insbesondere der mittlere Abwurfwinkel und die Verteilung des Düngers innerhalb des Abwurfbereiches aber auch die Ausbringmenge lassen sich mittels des Sensorsystems bestimmen. In Reaktion auf die ermittelte Verteilcharakteristik können Einstellparameter, welche die Verteilung beeinflussen, wie beispielsweise die Schleuderscheibendrehzahl und der Aufgabepunkt des Düngers auf die Schleuderscheibe angepasst und geregelt werden. Die Bestimmung der Verteilercharakteristik wird jedoch insbesondere bei sehr kleinen Ausbringmengen dadurch erschwert, dass die Anzahl der zu detektieren Objekte und damit das auswertbare Messsignal sehr gering ist. Ein Steuersystem für einen Schleuderstreuer nach dem Oberbegriff des Anspruchs 1 ist aus DE 197 42 441 A1 bekannt. Dieses Dokument offenbart auch ein Verfahren zur Steuerung eines Schleuderstreuers zur Ausbringung von landwirtschaftlichem Gut nach dem Oberbegriff des Anspruchs 8.

Aufgabe der vorliegenden Erfindung ist es ein verbessertes Steuersystem und eine Verfahren bereitzustellen, welches eine präzisere Bestimmung der Verteilercharakteristik, insbesondere bei geringen Ausbringmengen, ermöglicht.

Diese Aufgabe wird in erfindungsgemäßer Weise dadurch gelöst, dass bei der Bestimmung der Regelparameter durch das Steuersystem zusätzlich zu den Parametern zur Charakterisierung der Verteilcharakteristik mittels der berührungslos arbeitenden Sensoren zumindest ein zweiter Parameter, der geeignet ist, die aktuell auf die zumindest eine Schleuderscheibe aufgebrachte Gutmenge zu quantifizieren, berücksichtigt wird. Durch die Kombination der Messsignale der berührungslos arbeitenden Sensoren und eines zweiten Parameters, welcher zur Quantifizierung der aufgebrachten Gutmenge geeignet ist, lässt sich die Ermittlung der Verteilercharakteristik in effizienter Weise verbessern. Insbesondere bei sehr geringen Ausbringmengen besteht das Problem, dass der Signalpegel der Radarsensoren stark abnimmt. Unter diesen Umständen ist besonders vorteilhaft, wenn bei der Auswertung der Signale der berührungslos arbeitenden Sensoren zusätzlich ein Parameter berücksichtigt wird, welcher direkt von der Ausbringmenge abhängig ist.

In einer vorteilhaften Weiterbildung wird der zweite Parameter aus der Dosierschieberstellung abgeleitet. Die Dosierschieberstellung ist ein direktes Maß dafür, wie viel Dünger auf die Schleuderscheibe aufgebracht wird. Zudem kann sich die Form der Öffnung des Dosierschiebers von Schleudersteuer zu Schleudersteuer unterscheiden und ist dadurch bestimmt, dass sogenannte Mengeneffekte bei der Verteilung minimiert werden sollen. Diese werden dadurch hervorgerufen, dass sich wegen der räumlichen Ausdehnung der Öffnung, je nach Öffnungsgrad, ein veränderter Auftreffbereich des Düngers auf die Schleuderscheibe und damit auch ein veränderter mittlerer Auftreffpunkt des Düngers auf die Schleuderscheibe ergibt. Somit ist die Dosierschieberstellung zum einen geeignet dem Steuersystem anzugeben, wie viel Dünger gerade auf die Schleuderscheibe aufgebracht wird, andererseits können auch Einflüsse der Dosierschieberstellung auf die Verteilercharakteristik hervorgerufen beispielsweise durch Mengeneffekte effizient berücksichtigt werden.

In einer alternativen Ausgestaltung der Erfindung verfügt der Schleuderstreuer zusätzlich über zumindest einen zweiten Sensor zur Erfassung des Antriebsdrehmomentes der Schleuderscheibe, aus welchem sich die Menge des ausgebrachten Gutes bestimmen lässt und der zweite Parameter aus dem Messsignal des zweiten Sensors abgeleitet wird. Mittels dieses zweiten Sensors lässt sich zuverlässig aus dem Antriebsdrehmoment der Schleuderscheibe oder einem hierzu proportionalen Signal, wie beispielsweise dem Hydraulikdruck im Antriebsblock eines hydraulisch angetriebenen Schleudersteuers, auch bei geringen Mengen die jeweilige Ausbringmenge bestimmen. Die hierdurch bestimmte Ausbringmenge lässt sich entsprechend vorteilhaft verwenden, um die Bestimmung der Verteilercharakteristik zu präzisieren. Auch ist es denkbar sowohl die Stellung des Dosierschiebers als auch die Drehmomentbestimmung zu verwenden und zu einer noch präziseren Bestimmung der Verteilercharakteristik zu kombinieren.

In einer vorteilhaften Weiterbildung der Erfindung wird zumindest eine durch die Art des auszubringenden Gutes bestimmte Größe, wie vorzugsweise Rauigkeit, Partikelgröße, Dichte, bei der Bestimmung des zweiten Parameters berücksichtigt. Aufgrund des abweichenden Rieselverhaltens in Abhängigkeit von der Rauigkeit der Düngerpartikel ergibt sich für verschiedene Düngersorten bei gleicher Dosierschieberstellung eine variierende Ausbringmenge. In analoger Weise hängt die Ausbringmenge ebenfalls ab von der Partikelgröße und Dichte des jeweils ausgebrachten Gutes. Die Eigenschaften des jeweiligen Düngers können in dem Steuersystem, beispielsweise in Tabellenform, gespeichert sein oder in dieses eingegeben werden.

Auch bezüglich der Ausbringmengenbestimmung mittels Drehmomenterfassung ergibt sich eine entsprechende Abhängigkeit, da auch hier der gemessene Parameter nämlich das für die Ausbringung benötigte Drehmoment von Düngereigenschaften abhängt. Beispielsweise ändert sich das Rollverhalten der Düngerkörner auf der Streuscheibe und den Streuschaufeln mit geänderter Rauigkeit, so dass auch hier Eigenschaften des Düngers vorteilhaft berücksichtigt werden können. Auch hier gilt, dass für eine oder mehrere Düngersorten die jeweils für die Ausbringmengenbestimmung benötigten Parameter in dem Steuersystem hinterlegt sein können.

In einer möglichen Ausgestaltung der Erfindung wird ein unterer und/oder oberer Grenzwert in dem Steuersystem hinterlegt oder an dieses übergeben, welcher definiert, bis zu welcher Gutmenge und/oder Schieberstellung und/oder Antriebsdrehmoment der zweite Parameter bei der Bestimmung der Regelparameter durch das Steuersystem berücksichtigt wird. Die Berücksichtigung des zweiten Parameters, welcher ein Maß für die Ausbringmenge ist, erfolgt besonders vorteilhaft in gewissen Betriebszuständen des Düngersteuers, insbesondere bei der Ausbringung von sehr geringen Mengen. Daher kann es vorteilhaft sein Grenzwerte zu definieren welche angeben in welchen Betriebszuständen der zweite Parameter Verwendung finden soll.

In einer vorteilhaften Weiterbildung der Erfindung wird eine Warnung an den Benutzer ausgegeben, wenn der jeweilige Grenzwert unter oder überschritten wird. Auf diese Weise kann dem Benutzer eine Rückmeldung gegeben werden, falls der Streuer in einem Zustand betrieben wird, in welchem die Ermittlung von Parametern der Verteilercharakteristik besonders fehlerbehaftet sein kann. Der Benutzer kann entsprechend reagieren und eine Anpassung der Verteilerparameter vornehmen. Beispielsweise kann die Ausbringmenge und korrespondierend die Fahrgeschwindigkeit erhöht werden, um ein besseres Sensorsignal zu generieren, die Ausbringrate, also ausgebrachte Düngermasse pro Fläche, jedoch konstant zu belassen. Andererseits kann der Benutzer hierdurch angeregt werden, eine erhöhte Aufmerksamkeit auf den Verteilvorgang zu richten.

In einer möglichen Weiterbildung der Erfindung wird ein Sollwert des zweiten Parameters in das Steuersystem eingegeben und/oder aus einer hinterlegten Tabelle ausgewählt, wobei der Sollwert bei der Anpassung der Regelparameter berücksichtigt wird. Auf diese Weise kann die Bestimmung des zweiten Parameters nicht nur für eine verbesserte Bestimmung der Verteilcharakteristik verwendet werden, sondern es kann darüber hinaus auch ein Sollwert für die Ausbringmenge eingeregelt werden.

Es wird zudem ein Verfahren zur Steuerung eines Schleudersteuers bereitgestellt, wobei bei der Bestimmung der Regelparameter zusätzlich zu den Parametern zur Charakterisierung der Verteilcharakteristik mittels der berührungslos arbeitenden Sensoren zumindest ein zweiter Parameter, der geeignet ist, die aktuell auf die zumindest eine Schleuderscheibe aufgebrachte Gutmenge zu quantifizieren, berücksichtigt wird. Hierdurch wird in vorteilhafter Weise eine präzisere Bestimmung der Verteilercharakteristik durch Berücksichtigung der jeweils ausgebrachten Gutmenge erreicht.

Weitere vorteilhafte Aspekte der Erfindung ergeben sich aus den weiteren Unteransprüchen sowie der Figurenbeschreibung. Die Figuren zeigen hierbei
- Fig. 1: einen Schleuderstreuer mit Sensoren zur berührungslosen Charakterisierung des Verteilvorganges und
- Fig. 2: ein Ablaufdiagramm der erfindungsgemäßen Steuerung.

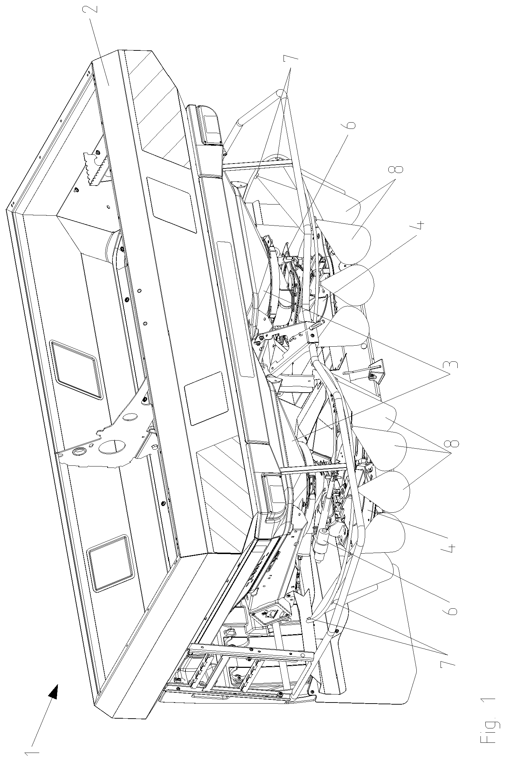

In Figur 1 dargestellt ist ein Schleudersteuer 1 mit einem Behälter 2 in dem das auszubringende Düngemittel während des Verteilervorgangs vorgehalten wird. Das Düngemittel wird über Auslauföffnungen am unteren Ende zweier trichterförmiger Bereiche 3 des Behälters 2 den Streuscheiben 4 zugeführt. Die Größe der Auslassöffnungen ist durch Dosierschieber in an sich bekannter Weise variabel wählbar. Hierfür ist der Dosierschieber mittels eines Antriebs 6 in seiner Position steuerbar. Die Austrittsmenge Dünger auf die Streuscheibe kann somit beispielsweise aus der Fahrkabine eines den Streuer tragenden Schleppers gesteuert oder mittels des erfindungsgemäßen Steuersystems automatisch eingestellt werden. Die Position des Dosierschiebers ist mittels zumindest eines Sensors bestimmbar. Beispielsweise kann an dem Antrieb 6 ein Sensor angeordnet sein, welcher eine Bewegung des zum Antrieb gehörenden Motors oder Aktors erfasst und hieraus die Dosierschieberstellung ableitet. Alternativ kann auch an dem Dosierschieber selbst ein Sensor zur Erfassung der jeweiligen Stellung angeordnet sein, beispielsweise in der Nähe des Drehpunktes, um den der Dosierschieber verschenkt wird. Der Dünger wird nach dem Auftreffen auf die Streuscheiben 4 mittels der auf den Streuscheiben angeordneten Streuschaufeln in Breitverteilung hinter dem Schleuderstreuer 1 auf dem Boden verteilt.

Jeder Streuscheibe 4 sind mehrere Radarsensoren 7 zugeordnet, welche zusammen als Sensorsystem die Parameter der Verteilercharakteristik bestimmen. Hierfür werden die abgeworfenen Düngerkörner mit Radarstrahlen 8 beaufschlagt. Das von den Düngerpartikeln reflektierte bzw. gestreute Signal wird wiederum durch die Sensoren erfasst und zur Ermittlung der Verteilercharakteristik in den Sensoren oder einer Steuereinheit ausgewertet. Um den Streubereich der jeweiligen Streuscheibe 4 möglichst lückenlos abzudecken sind mehrere Sensoren 7 konzentrisch um das Zentrum der Streuscheiben im hinteren Bereich des Schleuderstreuers 1 platziert.

In Reaktion auf die bestimmte Verteilercharakteristik, werden Parameter des Schleudersteuers 1 durch das Steuersystem angepasst, um eine vorgegebene Verteilcharakteristik einzustellen. Zur Ermittlung der Parameter werden dem Steuersystem verschiedene Daten vorgegeben. Hierbei kann es sich beispielsweise um eine Sollarbeitsbreite oder Daten handeln, welche die Verteilereigenschaften verschiedener Düngersorten charakterisieren. Die Verteilercharakteristik wird durch das Steuersystem angepasst, indem beispielsweise die Drehzahl der Streuscheiben 4, der Aufgabepunkt des Düngers auf die Streuscheiben 4 oder die Stellung von Streuschaufeln eingestellt wird.

Bei geringen Ausbringmengen werden nur verhältnismäßig wenige Düngerpartikel pro Sensor und Zeiteinheit detektiert. Unter diesen Umständen wird eine präzise Bestimmung der Verteilercharakteristik mittels der Radarsensoren 7 erschwert. Um trotzdem eine hinreichende Genauigkeit zu erlangen, ist in erfindungsgemäßer Weise vorgesehen das bei der Ermittlung der Verteilercharakteristik durch das Steuersystem ein Parameter berücksichtigt wird, welcher geeignet ist, die jeweils momentan auf die Streuscheiben 4 aufgebrachte Menge an zu verteilendem Gut zu quantifizieren. Hieraus lässt sich zum einen die ausgebrachte Menge bestimmen. Zudem kann hieraus die Dosierschieberstellung und damit der genaue Aufgabepunkt und/oder Aufgabebereich des Düngers auf die Streuscheibe ermittelt und eventuelle Veränderungen der Verteilercharakteristik aufgrund von Mengeneffekten berücksichtigt werden. Alternativ oder zusätzlich kann vorgesehen sein, dass zur Ermittlung der Verteilercharakteristik bei sehr kleinen Ausbringmengen das Signal der Radarsensoren 8 über einen längeren Zeitraum gemittelt wird, um ein verlässliches Signal zu erhalten.

Es kann vorgesehen sein, dass der Parameter zur Bestimmung der momentanen Ausbringmenge nur bei der Regelung der Verteilercharakteristik berücksichtigt wird, wenn dieser Parameter unter (über) einem festgelegten Schwellwert liegt, da die Ermittlung der Verteilercharakteristik in besonderen Grenzbereichen, beispielsweise bei sehr geringen (sehr großen) Ausbringmengen, erschwert sein kann.

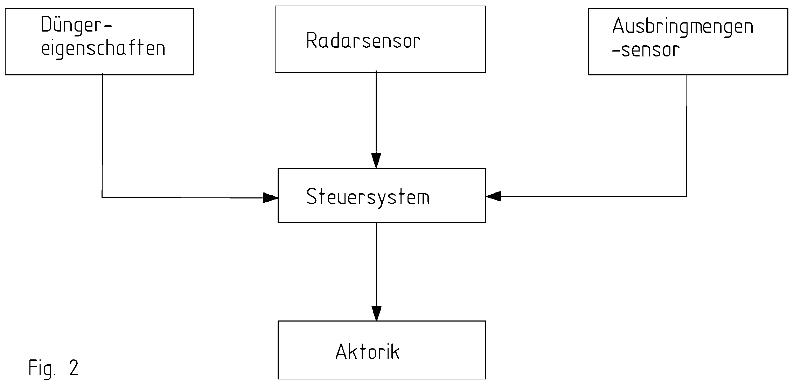

Ein Ablaufdiagramm zur Durchführung des erfindungsgemäßen Verfahrens zum Betrieb eines entsprechenden Steuersystems ist in Figur 2 dargestellt. Die Daten der Radarsensoren werden als Rohdaten oder bereits gefilterte und/oder bearbeitete Daten an das erfindungsgemäße Steuersystem übergeben und zur Ermittlung der Verteilercharakteristik verwendet. Weitere Daten wie Düngereigenschaften (Dichte, durchschnittliche Partikelgröße, Rauigkeit) können bei der Ermittlung berücksichtigt werden. Auch ist es denkbar, dass das Steuersystem Parameter der Maschine, wie den Typ oder geometrische Details der verwendeten Streuscheibe und/oder Streuschaufeln bei der Regelung einbezieht. Diese Daten können händisch in das Steuersystem eingegeben werden oder beispielsweise in Tabellen dem Steuersystem zugänglich sein.

Insbesondere bei sehr kleinen Ausbringmengen ist es nun in erfindungsgemäßer Weise möglich, dass weitere Sensordaten berücksichtigt werden, welche die derzeitige Ausbringmenge anzeigen. Dies kann beispielsweise ein Stellungssignal eines Sensors an einem Dosierschieber sein. Die Ausbringmenge kann für die Regelung des Steuersystems selbst berücksichtigt werden oder lediglich anzeigen, dass zur Bestimmung einer verlässlichen Verteilcharakteristik eine stärkere Mittelung der Sensordaten der Radarsensoren vorteilhaft ist.

Aus all diesen Daten wird nun durch das Steuersystem die jeweilige Verteilercharakteristik pro Streuscheibe ermittelt und mit einer gewünschten Verteilercharakteristik abgeglichen. Diese ergibt sich zum einen aus hinterlegten Sollwerten, beispielsweise für die Arbeitsbreite, und zudem aus den Düngereigenschaften und den Maschinenparametern. Stimmen die gewünschte und die tatsächliche Verteilercharakteristik nicht überein, wird durch das Steuersystem auf entsprechende Aktoren eingewirkt und somit eine Regelung des Verteilervorganges, beispielsweise durch Veränderung der Streuscheibendrehzahl, des Aufgabepunktes des Düngers auf die Streuscheibe oder Anpassung der auf die Streuscheibe aufgebrachten Gutmenge, vorgenommen.

## Patentansprüche

1. Steuersystem für einen Schleuderstreuer (1) zur Ausbringung von landwirtschaftlichem Gut, vorzugsweise Dünger, wobei der Schleuderstreuer (1) über einen Behälter (2) zur Aufbewahrung des Gutes verfügt, wobei das Gut mittels zumindest einer Schleuderscheibe (4) in Breitverteilung ausgebracht wird, wobei die auszubringende Menge des Guts mittels eines Dosierorgans, vorzugsweise eines Dosierschiebers, in regelbarer Weise der zumindest einen Schleuderscheibe zuführbar ist, wobei der Schleuderstreuer ferner über zumindest einen Sensor (7), vorzugsweise Radarsensor, zur berührungslosen Charakterisierung mindestens eines ersten Parameters der Verteilcharakteristik, wie vorzugsweise Wurfrichtung und/oder Wurfweite und/oder Arbeitsbreite, des Schleuderstreuers verfügt, wobei das Steuersystem konfiguriert ist, Regelparameter die Verteilung betreffend, wie vorzugsweise Position eines Einleitsystems des Düngers auf die Schleuderscheibe, Drehzahl der Schleuderscheibe und/oder zugeführte Menge des Guts, in Reaktion auf die Messsignale des zumindest einen Sensors anzupassen,
**dadurch gekennzeichnet, dass**
bei der Bestimmung der Regelparameter durch das Steuersystem zusätzlich zumindest ein zweiter Parameter, der geeignet ist, die aktuell auf die zumindest eine Schleuderscheibe aufgebrachte Gutmenge zu quantifizieren, berücksichtigt wird.

2. Steuersystem nach Anspruch 1, **dadurch gekennzeichnet, dass** der zweite Parameter aus der Dosierschieberstellung abgeleitet wird.

3. Steuersystem nach Anspruch 1, **dadurch gekennzeichnet, dass** der Schleuderstreuer (1) zusätzlich über zumindest einen zweiten Sensor zur Erfassung des Antriebsdrehmomentes der Schleuderscheibe (4) verfügt, aus welchem sich die Menge des ausgebrachten Gutes bestimmen lässt und dass der zweite Parameter aus dem Messsignal des zweiten Sensors abgeleitet wird.

4. Steuersystem nach zumindest einem der Ansprüche 1 - 3, **dadurch gekennzeichnet, dass** zumindest eine durch die Art des auszubringenden Gutes bestimmte Größe, wie vorzugsweise Rauigkeit, Partikelgröße, Dichte, bei der Bestimmung des zweiten Parameters berücksichtigt wird.

5. Steuersystem nach zumindest einem der Ansprüche 1 - 4, **dadurch gekennzeichnet, dass** ein unterer und/oder oberer Grenzwert in dem Steuersystem hinterlegt oder an dieses übergebbar ist, welcher definiert, bis zu welcher Gutmenge und/oder Schieberstellung und/oder Antriebsdrehmoment der zweite Parameter bei der Bestimmung der Regelparameter durch das Steuersystem berücksichtigt wird.

6. Steuersystem nach Anspruch 5 wobei unterhalb des unteren oder oberhalb des oberen Grenzwertes eine Warnung an den Benutzer ausgegeben wird.

7. Steuersystem nach zumindest einem der Ansprüche 1 bis 6, wobei ein Sollwert des zweiten Parameters in das Steuersystem eingebbar und/oder aus einer hinterlegten Tabelle auswählbar ist, wobei der Sollwert bei der Anpassung der Regelparameter berücksichtigt wird.

8. Verfahren zur Steuerung eines Schleuderstreuers (1) zur Ausbringung von landwirtschaftlichem Gut, wobei das Gut mittels zumindest einer Schleuderscheibe (4) in Breitverteilung ausgebracht wird, wobei die auszubringende Menge der Schleuderscheibe (4) in regelbarer Weise zuführbar ist, wobei zumindest ein Parameter die Verteilcharakteristik des Schleuderstreuers (1) betreffend mittels zumindest eines berührungslos arbeitenden Sensors (7) bestimmbar ist, wobei Regelparameter die Verteilung betreffend in Reaktion auf das Messsignal des berührungslos arbeitenden Sensors angepasst werden,
**dadurch gekennzeichnet, dass**
bei der Bestimmung der Regelparameter zusätzlich zumindest ein zweiter Parameter, der geeignet ist, die aktuell auf die zumindest eine Schleuderscheibe (4) aufgebrachte Gutmenge zu quantifizieren, berücksichtigt wird.

9. Verfahren nach Anspruch 8, **dadurch gekennzeichnet, dass** ein unterer und/oder oberer Grenzwert definiert ist, bis zu welcher Gutmenge der zweite Parameter bei der Bestimmung der Regelparameter berücksichtigt wird.

10. Verfahren nach 9, wobei unterhalb des unteren und/oder oberhalb des oberen Grenzwertes keine Regelung/Messung mehr vorgenommen wird.

11. Verfahren nach Anspruch 9 oder 10 wobei unter des unteren oder oberhalb des oberen Grenzwertes eine Warnung an den Benutzer ausgegeben wird.

12. Verfahren nach zumindest einem der Ansprüche 8 bis 11, wobei ein Sollwert bei der Anpassung der Regelparameter berücksichtigt wird.

## Claims

1. Control system for a centrifugal spreader (1) for applying agricultural material, preferably fertilizer, wherein the centrifugal spreader (1) has a container (2) for storing the material, wherein the material is applied in a wide spread by means of at least one centrifugal disc (4), wherein the amount of material to be applied can be supplied in a controllable manner to the at least one centrifugal disc by means of a metering element, preferably a metering slider, wherein the centrifugal spreader also has at least one sensor (7), preferably a radar sensor, for contactlessly characterizing at least one first parameter of the distribution characteristic, such as preferably the throwing direction and/or throwing distance and/or working width, of the centrifugal spreader, wherein the control system is configured to adapt control parameters relating to the distribution, such as preferably the position of a system for introducing the fertilizer to the centrifugal disc, the speed of the centrifugal disc and/or the supplied amount of material, in response to the measurement signals from the at least one sensor,
**characterized in that**
at least one second parameter which is suitable for quantifying the amount of material currently applied to the at least one centrifugal disc is additionally taken into account by the control system when determining the control parameters.

2. Control system according to Claim 1, **characterized in that** the second parameter is derived from the metering slider position.

3. Control system according to Claim 1, **characterized in that** the centrifugal spreader (1) additionally has at least one second sensor for capturing the drive torque of the centrifugal disc (4), from which the amount of applied material can be determined, and **in that** the second parameter is derived from the measurement signal from the second sensor.

4. Control system according to at least one of Claims 1-3, **characterized in that** at least one variable determined by the type of material to be applied, such as preferably the roughness, particle size, density, is taken into account when determining the second parameter.

5. Control system according to at least one of Claims 1-4, **characterized in that** a lower limit value and/or an upper limit value is/are stored in the control system or can be transferred to the latter, which limit value defines the amount of material and/or slider position and/or drive torque up to which the second parameter is taken into account by the control system when determining the control parameters.

6. Control system according to Claim 5, wherein a warning is output to the user below the lower limit value or above the upper limit value.

7. Control system according to at least one of Claims 1 to 6, wherein a desired value of the second parameter can be input to the control system and/or can be selected from a stored table, wherein the desired value is taken into account when adapting the control parameters.

8. Method for controlling a centrifugal spreader (1) for applying agricultural material, wherein the material is applied in a wide spread by means of at least one centrifugal disc (4), wherein the amount to be applied can be supplied in a controllable manner to the centrifugal disc (4), wherein at least one parameter relating to the distribution characteristic of the centrifugal spreader (1) can be determined by means of at least one contactlessly operating sensor (7), wherein control parameters relating to the distribution are adapted in response to the measurement signal from the contactlessly operating sensor,
**characterized in that**
at least one second parameter which is suitable for quantifying the amount of material currently applied to the at least one centrifugal disc (4) is additionally taken into account when determining the control parameters.

9. Method according to Claim 8, **characterized in that** a lower limit value and/or an upper limit value is/are defined with regard to the amount of material up to which the second parameter is taken into account when determining the control parameters.

10. Method according to 9, wherein control/measurement is no longer carried out below the lower limit value and/or above the upper limit value.

11. Method according to Claim 9 or 10, wherein a warning is output to the user below the lower limit value or above the upper limit value.

12. Method according to at least one of Claims 8 to 11, wherein a desired value is taken into account when adapting the control parameters.

## Revendications

1. Système de commande d'un épandeur centrifuge (1) pour destiné à expulser des produits agricoles, de préférence de l'engrais, dans lequel l'épandeur centrifuge (1) comporte un réservoir (2) pour le stockage du produit, dans lequel le produit est expulsé en large distribution au moyen d'au moins un disque d'épandage (4), dans lequel la quantité de produit à expulser peut être délivrée à l'au moins un disque d'épandage de manière réglable au moyen d'un organe de dosage, de préférence un tiroir de dosage, dans lequel l'épandeur centrifuge comporte en outre au moins un capteur (7), de préférence un capteur radar, pour la caractérisation sans contact d'au moins un premier paramètre de la caractéristique de distribution, tel que de préférence le sens de projection et/ou la portée de projection et/ou la largeur de travail de l'épandeur, dans lequel le système de commande est configuré pour ajuster des paramètres de régulation relatifs à la distribution, tels que de préférence la position d'un système de chargement de l'engrais sur le disque d'épandage, la vitesse de rotation du disque d'épandage et/ou la quantité de produit délivrée, en réponse aux signaux de mesure de l'au moins un capteur, **caractérisé en ce que**,
lors de la détermination des paramètres de régulation par le système de commande, au moins un deuxième paramètre, qui est approprié pour quantifier la quantité de produit actuellement appliquée à l'au moins un disque d'épandage, est en outre pris en compte.

2. Système de commande selon la revendication 1, **caractérisé en ce que** le deuxième paramètre est dérivé de la position du tiroir de dosage.

3. Système de commande selon la revendication 1, **caractérisé en ce que** l'épandeur centrifuge (1) comporte en outre au moins un deuxième capteur destiné à détecter le couple d'entraînement du disque d'épandage (4), à partir duquel la quantité de produit expulsé peut être déterminée, et **en ce que** le deuxième paramètre est déduit du signal de mesure du deuxième capteur.

4. Système de commande selon au moins l'une des revendications 1 à 3, **caractérisé en ce qu'**au moins une grandeur, telle que de préférence la rugosité, la taille des particules, la densité, déterminée par le type de produit à expulser, est prise en compte lors de la détermination du deuxième paramètre.

5. Système de commande selon au moins l'une des revendications 1 à 4, **caractérisé en ce qu'**une valeur limite inférieure et/ou supérieure est stockée dans le système de commande ou peut lui être transférée, laquelle valeur limite définit la quantité de produit et/ou la position du tiroir et/ou le couple d'entraînement jusqu'auxquels le deuxième paramètre est pris en compte par le système de commande lors de la détermination des paramètres de régulation.

6. Système de commande selon la revendication 5, dans lequel un avertissement est délivré à l'utilisateur en dessous de la valeur limite inférieure ou au-dessus de la valeur limite supérieure.

7. Système de commande selon au moins l'une des revendications 1 à 6, dans lequel une valeur de consigne du deuxième paramètre peut être intégrée au système de commande et/ou sélectionné à partir d'une table stockée,
dans lequel la valeur de consigne est prise en compte lors de l'ajustement des paramètres de régulation.

8. Procédé de commande d'un épandeur centrifuge (1) pour l'expulsion de produits agricoles, dans lequel le produit est expulsé en large distribution au moyen d'au moins un disque d'épandage (4), dans lequel la quantité à expulser peut être délivrée de manière réglable à l'au moins un disque d'épandage (4), dans lequel au moins un paramètre relatif à la caractéristique de distribution de l'épandeur centrifuge (1) peut être déterminé au moyen d'au moins un capteur sans contact (7), dans lequel des paramètres de régulation relatifs à la distribution sont ajustés en réponse au signal de mesure du capteur sans contact,
**caractérisé en ce que**,
lors de la détermination des paramètres de régulation, au moins un deuxième paramètre, qui est approprié pour quantifier la quantité de produit actuellement délivrée à l'au moins un disque d'épandage (4) est en outre pris en compte.

9. Procédé selon la revendication 8, **caractérisé en ce qu'**une valeur limite inférieure et/ou supérieure est définie, jusqu'à laquelle le second paramètre est pris en compte lors de la détermination des paramètres de régulation.

10. Procédé selon 9,
dans lequel aucune régulation/mesure supplémentaire n'est effectuée en dessous de la valeur limite inférieure et/ou au-dessus de la valeur limite supérieure.

11. Procédé selon la revendication 9 ou 10, dans lequel un avertissement est délivré à l'utilisateur en dessous de la valeur limite inférieure ou au-dessus de la valeur limite supérieure.

12. Procédé selon au moins l'une des revendications 8 à 11, dans lequel une valeur de consigne est prise en compte lors de l'ajustement des paramètres de régulation.
